# EUROPEAN PATENT APPLICATION

(11) **EP 2 065 897 A2**
(43) Date of publication of application: **03.06.2009**
(21) Application number: 08169528.0
(22) Date of filing: 20.11.2008
(51) Int. Cl.: G21C 3/32, G21C 3/34

(54) **Segmented fuel rod bundle designs using fixed spacer plates**

(30) Priority: 28.11.2007 US 987160
(71) Applicant: GE-Hitachi Nuclear Energy Americas LLC, Wilmington, NC 28401 (US)
(72) Inventor: Russell II, William Earl, Wilmington, NC 28405 (US); Monetta, Christopher J., Wilmington, NC 28409 (US); Clark, Carlton Wayne, Wilmington, NC 28404 (US); James, Robert Bryant, Wilmington, NC 28405 (US); Smith, David Grey, Leland, NC 28451 (US)
(74) Representative: Gray, Thomas

(57) **Abstract**

Example embodiments are directed to a fuel rod design using segmented fuel rods that mechanically confine spacer plates to constant axial positions. Example embodiment spacer plates may be placed at axial connection points between fuel rod segments, and, when the fuel rod segments are mated, example embodiment spacer plates may be mechanically held by the mating.

## Description

### BACKGROUND

### Field

Example embodiments generally relate to fuel structures used in nuclear power plants and methods for using fuel structures.

### Description of Related Art

Generally, nuclear power plants include a reactor core having fuel arranged therein to produce power by nuclear fission. A common design in U.S. nuclear power plants is to arrange fuel in a plurality of cladded fuel rods bound together as a fuel assembly, or fuel bundle, placed within the reactor core. These fuel bundles typically include several spacing elements placed axially throughout the bundle to dampen vibration of the fuel rods, ensure minimum separation and relative positioning of the fuel rods, and mix coolant flowing axially through the bundle and spacers therein.

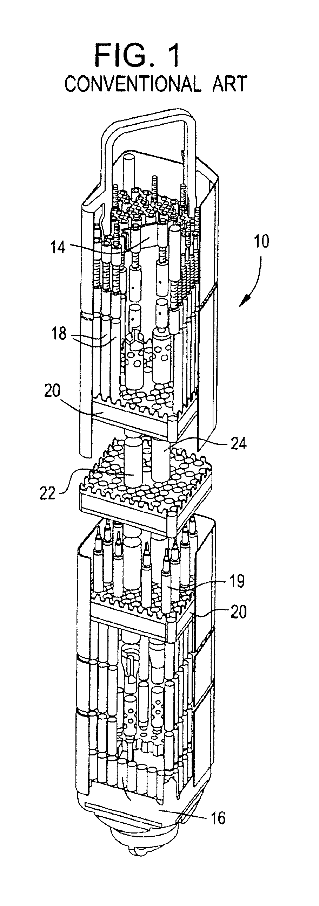

As shown in FIG. 1, a conventional fuel bundle 10 of a nuclear reactor, such as a BWR, may include an outer channel 12 surrounding an upper tie plate 14 and a lower tie plate 16. A plurality of full length fuel rods 18 and/or part length fuel rods 19 may be arranged in a matrix within the fuel bundle 10 and pass through a plurality of spacers (also known as spacer grids) 20 axially spaced one from the other and maintaining the rods 18, 19 in the given matrix thereof.

The fuel rods 18 and 19 are generally continuous from their base to terminal, which, in the case of the full length fuel rod 18, is from the lower tie plate 16 to the upper tie plate 14. The conventional spacers 20 are welded lattices that frictionally grip to the fuel rods 18 and 19, through the use of resistive contact segments, known as stops and/or springs, abutting the exterior of each rod that passes through the spacer 20. In this way, conventional spacers 20 may be held stationary at constant axial positions within the fuel bundle by the resistive contact points as high velocity coolant flows axially through the bundle 10.

### SUMMARY

Example embodiments are directed to a fuel rod and bundle design using segmented fuel rods that mechanically confine spacer plates to constant axial positions. Example embodiment spacer plates may be placed at axial connection points, called matings, between fuel rod segments, and, when the fuel rod segments are mated, example embodiment spacer plates may be mechanically held by the mating. Example embodiment spacer plates may be fabricated from a single stamp/molding process without the need for welding or movable parts. Example embodiment spacer plates and segmented fuel rod bundles may have reduced spacer plate slippage, reduced fuel damage due to spacer plate slippage, and reduced likelihood of fuel failure caused by debris fretting. Example embodiment spacer plates and segmented fuel rod bundles may further provide a reduced pressure drop with increased mixing of coolant flowing through a fuel bundle containing example embodiment spacer plates.

Example embodiment nuclear fuel bundles may include a flow channel in an axial, or longitudinal direction with a plurality of axial fuel rod segments in the channel in the axial direction. The fuel rod segments may be removably mated to each other in the axial direction and individually cladded. Example embodiment spacer plates may span the channel in a transverse direction perpendicular to the axial direction, the spacer plate rigidly confined in the channel by at least one mating between the fuel rod segments. Further, the spacer plate can be continuous, non-welded, and perforated.

### BRIEF DESCRIPTIONS OF THE DRAWINGS

There follows a detailed description of embodiments of the invention, by way of example only, with reference to the accompanying drawings, in which:
FIG. 1 is an illustration of a related art fuel assembly having spacer plates frictionally affixed to the assembly;
FIG. 2 is an illustration of an example embodiment segmented fuel rod assembly including example embodiment spacer plates;
FIG. 3 is a detailed illustration of a partially-assembled example embodiment segmented fuel rod assembly;
FIG. 4 is an illustration of an example embodiment segmented fuel rod segments with example embodiment spacer plates;
FIG. 5 is a detail illustration of example embodiment fuel rod segments, shown prior to mating without an example embodiment spacer plate;
FIG. 5A is a detail illustration of the example embodiment fuel rod segments of FIG. 5, shown after mating without an example embodiment spacer plate;
FIG. 5B is a detail illustration of the example embodiment fuel rod segments of FIG. 5, shown after mating with an example embodiment spacer plate connected therebetween;
FIG. 6 is an illustration of an example embodiment spacer plate;
FIG. 7 is an illustration of another example embodiment spacer plate; and
FIG. 8 is an illustration of another example embodiment spacer plate.

### DETAILED DESCRIPTION

Detailed illustrative embodiments of example embodiments are disclosed herein. However, specific structural and functional details disclosed herein are merely representative for purposes of describing example embodiments. The example embodiments may, however, be embodied in many alternate forms and should not be construed as limited to only example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments.

As used herein, the term "and/or" includes any and all combinations of one or more of the associated listed items.

It will be understood that when an element is referred to as being "connected," "coupled," "mated," "attached," or "fixed" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between", "adjacent" versus "directly adjacent", etc.).

The terminology used herein is for the purpose of describing particular embodiments only and is not intended to be limiting of example embodiments. As used herein, the singular forms "a", "an" and "the" are intended to include the plural forms as well, unless the language explicitly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

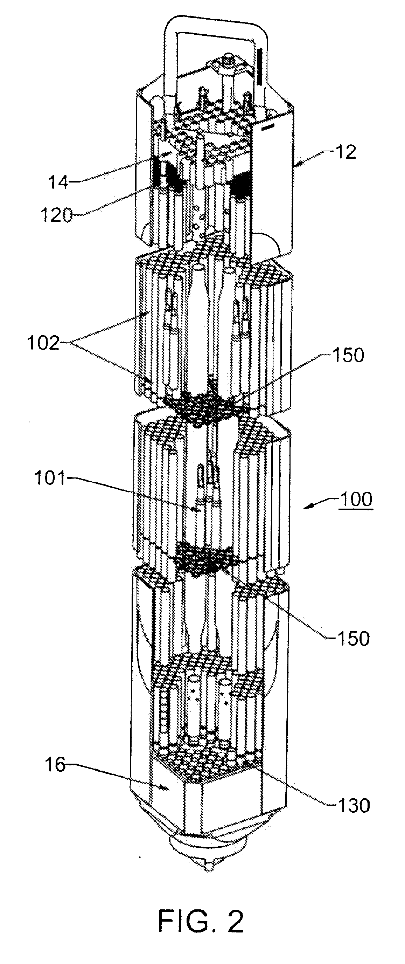

FIG. 2 illustrates a plurality of example embodiment rod segments, shown as both part-length rod segments 101 and full-length rod segments 102, between an upper end piece 120 and a lower end piece 130. The upper end piece 120 and lower end piece 130 may include threads or other mating mechanisms to mate with the lower and upper tie plates 16 and 14, respectively, of the example embodiment fuel bundle 100.

Rod segments 101 and 102 may be disposed in a channel 12 surrounding the example embodiment fuel bundle 100.

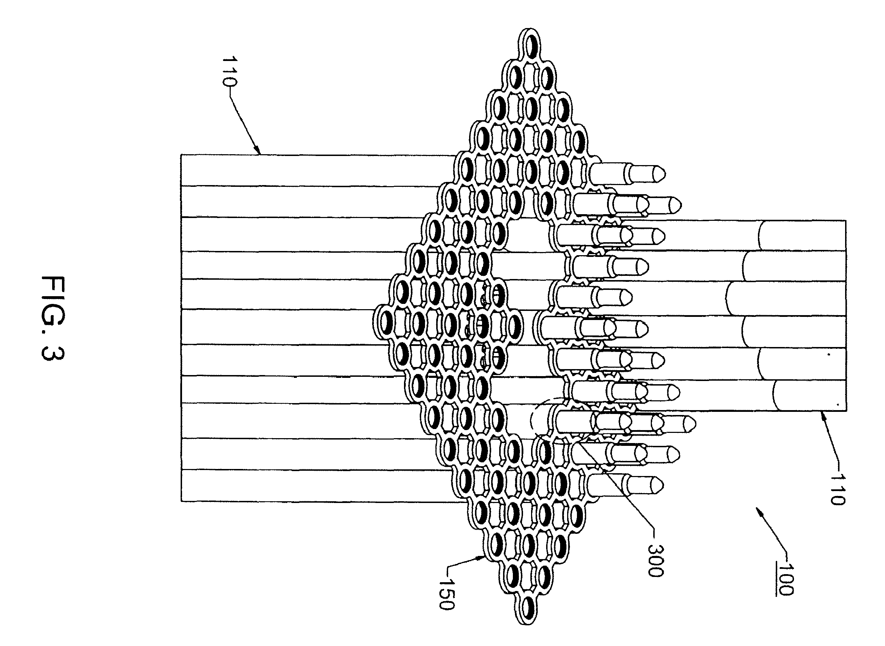

As shown in FIG. 3, axially adjacent rod segments may be interconnected, or mated, to each other directly or via an adaptor subassembly, a direct connection being shown generally within the dotted line circle of connection point, or mating, 300. Example embodiment rod segments may mate by a variety of mating means, including, for example, a tang/receptor, screw/threaded hole, internal hook and loop, etc. Example embodiment rod segments 110 may be attached between the upper and lower end pieces 120 and/or 130 (in FIG. 2) and to each other so as to form an entire axial length of the rod assembly 100.

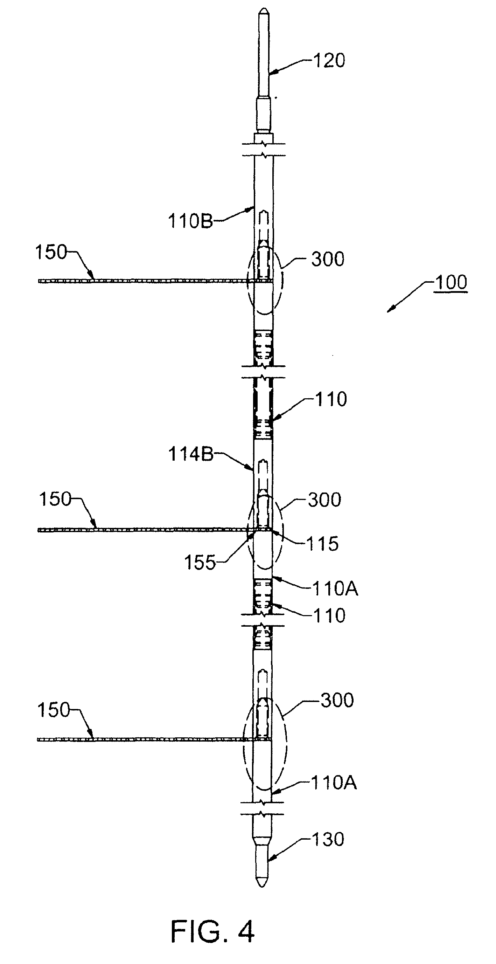

As shown in FIG. 4, example embodiment rod segment 110A, example embodiment rod segment 110B, and one each of the upper and lower end pieces 120 and 130 may be connected directly or by adaptor subassemblies at connection points 300 along the axial length of the rod assembly 100. Example embodiment rod segments 110A may 110B may be fixed length segments to facilitate the manufacturing process.

Example embodiment rod segments may be constructed of a material which is corrosion resistant and compatible with the other reactor components. For example, a zirconium alloy may be used in fabricating example embodiment rod segments. Example embodiment fuel rod segments having been described above, it will be appreciated that any reference to a "rod segment" or "fuel rod segment" invokes the above description, whereas a "fuel rod" or "rod" used alone refers to the continuous rods described in the background section.

FIGS. 3 and 4 illustrate a plurality of mated example embodiment rod segments in combination with a plurality of example embodiment spacer plates 150, so as to form an example embodiment fuel rod segment bundle 100. Example spacer plates 150 align with matings, or connection points, 300 along the axis of example embodiment bundle 100. Example embodiment spacer plates 150 may be mechanically fixed by the matings 300 by, for example, a complementary end 111 of a fuel segment 110 passing through a joint ring 155 of the example embodiment spacer plate 150. That is, where corresponding ends of fuel segments 110 join together at a mating 300, example embodiment spacer plates 150 may be confined by the mating of the fuel segments 110. Further example embodiments discussed and illustrated below show several different methods of how such confinement may be achieved. In this way, example embodiment spacer plates 150 may be fixed at axial positions in example embodiment fuel bundles mechanically, without friction or welding.

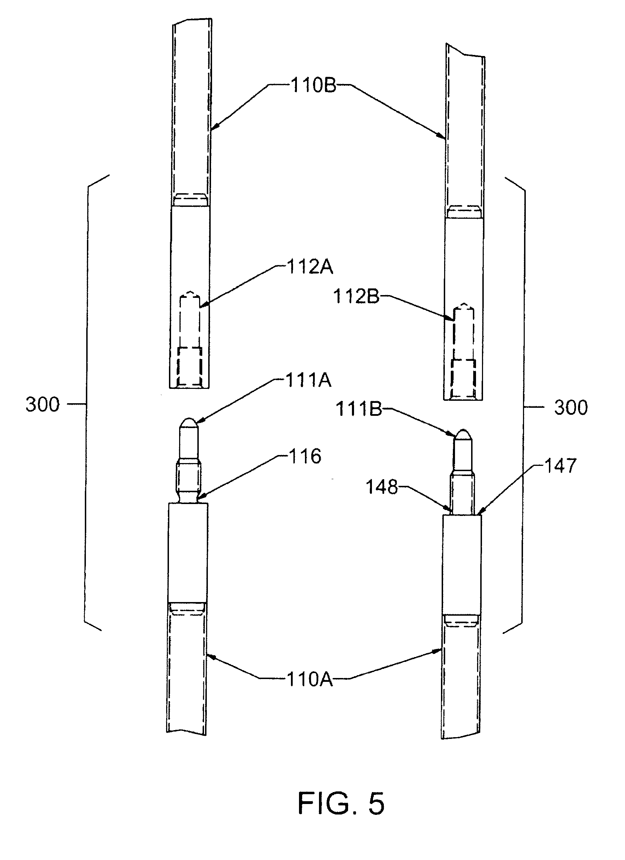

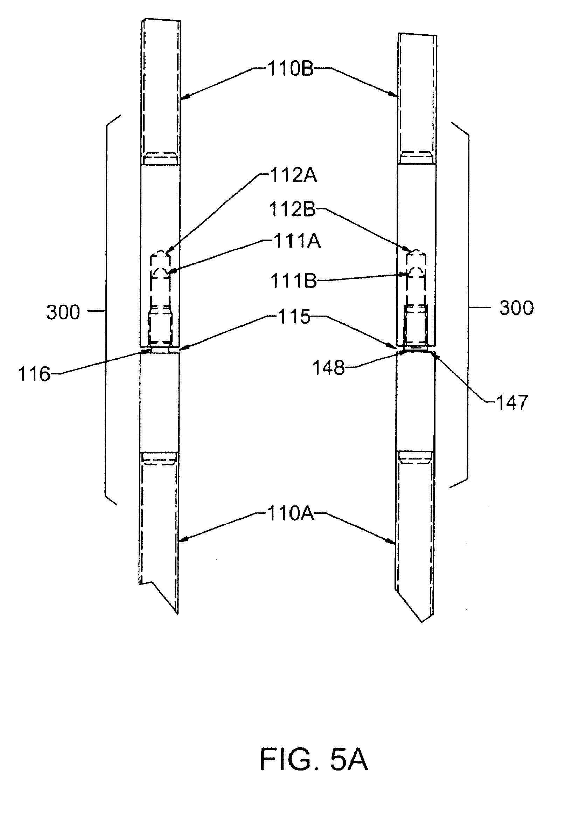

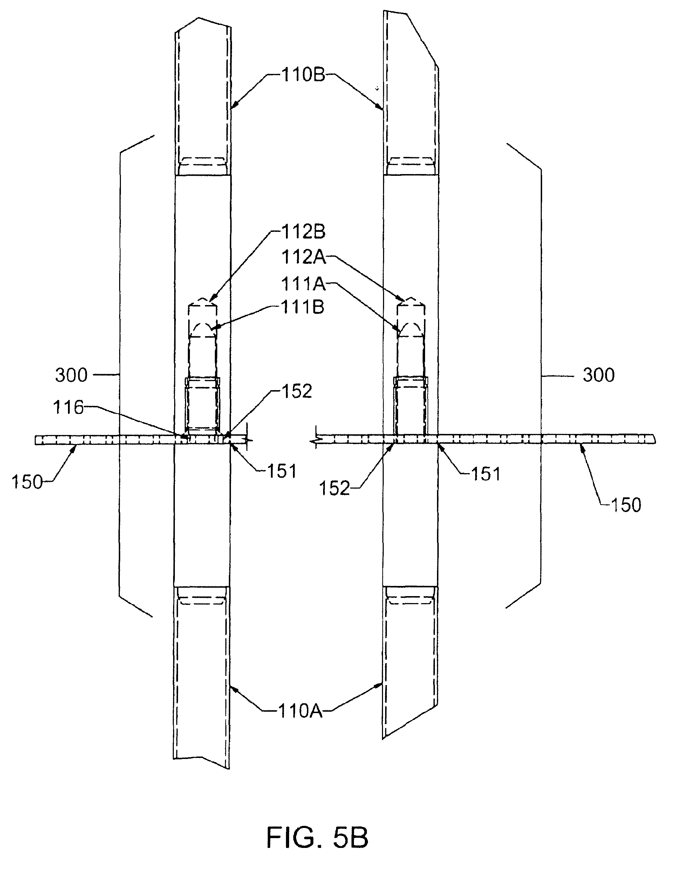

FIGS. 5, 5A, and 5B illustrate two different methods of confining example embodiment spacer plates 150 to matings 300 of example embodiment fuel segments. As shown in FIG. 5, example embodiment fuel rod segments 110B and 110A at a mating 300 may possess complementary ends 111A/111B and 112A/112B that may mate. The 112A female mating element may include a machined area 116, while the 112B female mating element may have threads 148 substantially to a shoulder 147.

As shown in 5A, mating elements 111A and 112A may join through a tang/receptor type mating. A connection recess 115 may be formed between the segments 110A and 110B when fully mated by 111A and 112A style mating elements. Similarly, mating elements 111B and 112B may join through a threaded hole / screw type mating. The shoulder 147 and a portion of threads 148 may be exposed when elements 111B and 112B are fully mated as shown in FIG. 5A.

FIG. 5B illustrates how various example embodiment spacers 150 may be confined between example embodiment rod segments 110A and 110B. As shown in FIG. 5B, an example embodiment spacer plate 150 may fit into the connection recess 116, around and/or through the mating elements 111A and 112A of the example segments 110A and 110B. Inner and outer diameters 152 and 151 of an annular hole in the example embodiment spacer plate 150 through which mating element 111 A may pass are shown in shadow in FIG. 4B to illustrate how example embodiment spacer plates 150 may be mechanically confined between the mated example embodiment rod segments 110A and 110B. Similarly, mating elements 111B and 112B may screw together and through an example embodiment spacer plate 150, which may include threading on inner diameter 152 to screw onto male mating element 111B. In this way, when mating elements 111A and 112A or 111B and 112B are interlocked, example embodiment spacer plates 150 may be prevented from moving in an axial direction up or down either of the example embodiment fuel segments 110A or 110B by normal, not only frictional, contact forces. Similarly, example embodiment spacer plates may be locked in transverse directions perpendicular to the axial direction by fitting around mating elements 111A/111B. If several example embodiment fuel segments 110 are used to form an example embodiment fuel bundle 100 (as shown in FIG. 3), example embodiment spacer plates 150 may be further prevented from rotating about an axis of the mating 300, thus holding example embodiment spacer plates 150 stationary translationally and angularly with respect to an example embodiment fuel rod segment bundle containing them.

Although the example embodiments shown in FIGS. 5, 5A, and 5B illustrate a spacer plate confined in a recessed area formed by a mating between a tang/receptor and threaded hole/screw, example embodiment spacer plates may be held at a connection point between two axially adjacent rod segments by any number of other means. For example, example embodiment spacer plates may pass through or interconnect with mating elements at connection points or may be otherwise mechanically clamped, fastened, etc. by the mating of two axially adjacent fuel rod segments.

Rod segment assemblies 100 formed of example embodiment rod segments 110 and spacer plates 100 are shown in FIGS. 2-5B, it being understood that one or more of the rod assemblies 100, rod segments 110, and/or spacer plates 150 shown in FIGS. 2-5B may be inserted into an example embodiment fuel bundle. For example, rod assemblies 100 and/or spacer plates 150 may substitute for one or more of the fuel rods 18 and 19 and spacer plates 20 in the fuel bundle 10 of FIG. 1.

Because example embodiment fuel bundles include example embodiment spacer plates fixed at particular axial positions without welding or friction, example embodiment fuel bundles may be subject to less damage and may have a reduced potential for fission product escape compared to conventional fuel bundles using spacer plates attached only to the radial exterior of continuous rods. For example, conventional spacer plates may slip along, wear on, or enhance fretting of conventional continuous fuel rods in which they come into contact due to the frictional method by which they contact the conventional rods. Example embodiment spacer plates and bundles, however, prevent or reduce these problems by mechanically securing spacer plates between two fuel rod segments, preventing slippage and wear and/or relocating fretting to mating positions along the fuel rod where fission products may not escape, due to the solid and/or non-fuel nature of the mating elements.

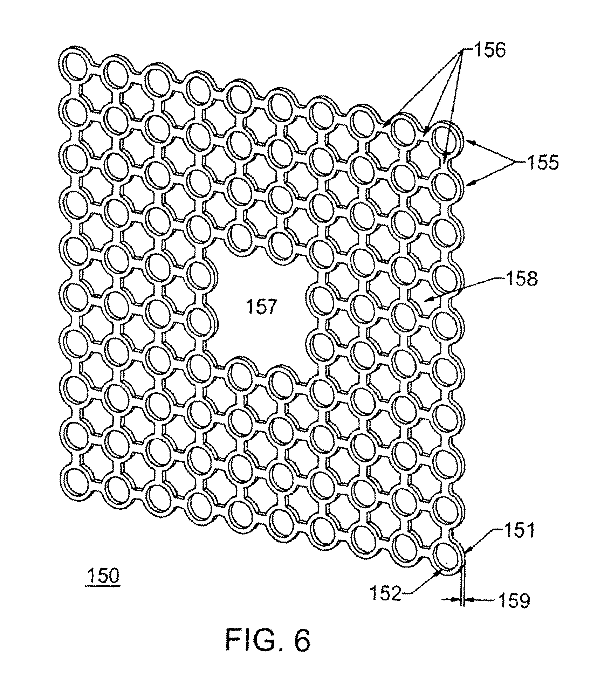

FIG. 6 illustrates an example embodiment spacer plate 150 that may be used in example embodiment fuel bundles discussed above with respect to FIGS. 2-5B. As shown in FIG. 6, an example embodiment spacer plate may be a substantially flat plate having several joint rings 155 with an inner and outer diameter 151 and 152, flow holes 158, and thickness 159. The joint rings 155 may be shaped so as to permit mating elements of example embodiment fuel rods to pass through the joint ring 155 and mate, thereby securing the joint ring 155 at the mating. For example, the joint rings may be annular with an inner diameter 151 substantially equal to an outer diameter of a mating element of an example embodiment fuel segment passing therethrough.

Several spacing segments 156 may join and rigidly hold adjacent joint rings 155, providing rigid spacing and vibration reduction of fuel rod segments attached to the example embodiment spacer plate. The joint rings 155 and spacing segments 156 are shown in a grid-like array in FIG. 5, with joint rings 155 occupying a single plane and being spaced at 90-degree intervals. Four spacing segments 156 may extend transversely every 90 degrees from the outer diameter 152 of each interior joint ring 155 to connect to other joint rings 155. In this way example embodiment spacer plate 150 may have a substantially square shape and equal numbers of joint rings 155 on each side. Spacer plate150 may have a thickness 159 to provide mechanical strength laterally among rod segments 110a and 110b, yet be flexible to adjust to slight differences in differential growth between rod segments 110a and 110b, based on the material and related mechanical strength and elasticity of the spacer plate 150.

Although the example embodiment in FIG. 6 is substantially square, any desired placement of joint rings 155 and spacing segments 156 are possible in order to accommodate a variety of fuel bundle shapes and rod positions. For example, a hexagonal or circular lattice of joint rings 155 and spacing segments 156 may accommodate example embodiment fuel bundles with those shapes. Similarly, any number of spacing segments 156 may rigidly hold each joint ring 155 at a variety of regular or irregular positions. Joint rings 155 and spacing segments 156 may have different shapes depending on the rod segment shape and desired flow characteristics of a coolant flowing through example embodiment spacer plates 150.

The example embodiment spacer plate 150 shown in FIG. 6 may include a gap 157 that accommodates larger water rods or channels in the middle of an example embodiment fuel rod segment bundle, but the gap 157 is not necessarily present, depending on the bundle design. Further, the gap 157 may be placed at other, non-central positions and may have other, non-square shapes.

As shown in FIGS. 5B and 6, the outer diameter 152 of annular joint rings of example embodiment spacer plates 150 may be substantially equal to the outer diameter of fuel rod segments 110 mating at the particular joint ring. In this way, the example embodiment spacer plate 150 and fuel rod segments 110 may provide a continuous axial profile for coolant flowing axially along fuel rod segments in an operating nuclear core containing example embodiment fuel rod segment bundles. This continuous profile of example embodiment fuel rod segment bundles may reduce debris trapping common to conventional spacer plates that extend transversely from fuel rods. A reduction in trapped debris by example embodiment spacer plates and bundles may further reduce fretting and risk of fission product release, because trapped debris may contribute to fretting of conventional fuel rods.

As shown in FIG. 6, a plurality of flow holes 158 may be formed by the junction of the joint rings 155 and spacing segments 156. Coolant may flow through flow holes 158 in an operating nuclear core containing example embodiment fuel rod segment bundles. Because the outer diameters 152 of joint rings 155 may be substantially equal to example embodiment fuel rod segments adjoining the joint rings 155, pressure drop of coolant flowing through example embodiment spacer plates 150 may be reduced compared to conventional spacer plates that occupy a larger portion of flow channels through conventional bundles. That is, only spacing segments 156 may substantially contribute to pressure drop of coolant flowing through the flow holes 158, such that reduction of the size of spacing segments 156 may further reduce pressure drop through example embodiment spacer plates 150 compared to conventional spacer plates with smaller flow areas. With a lower pressure drop through example embodiment bundles and spacer plates, pumping energy (or pumping head) required to move coolant through the core may be reduced. In the example of natural circulation plants, this may result in higher core flow, improved nuclear efficiency, and/or improvement in thermal limits.

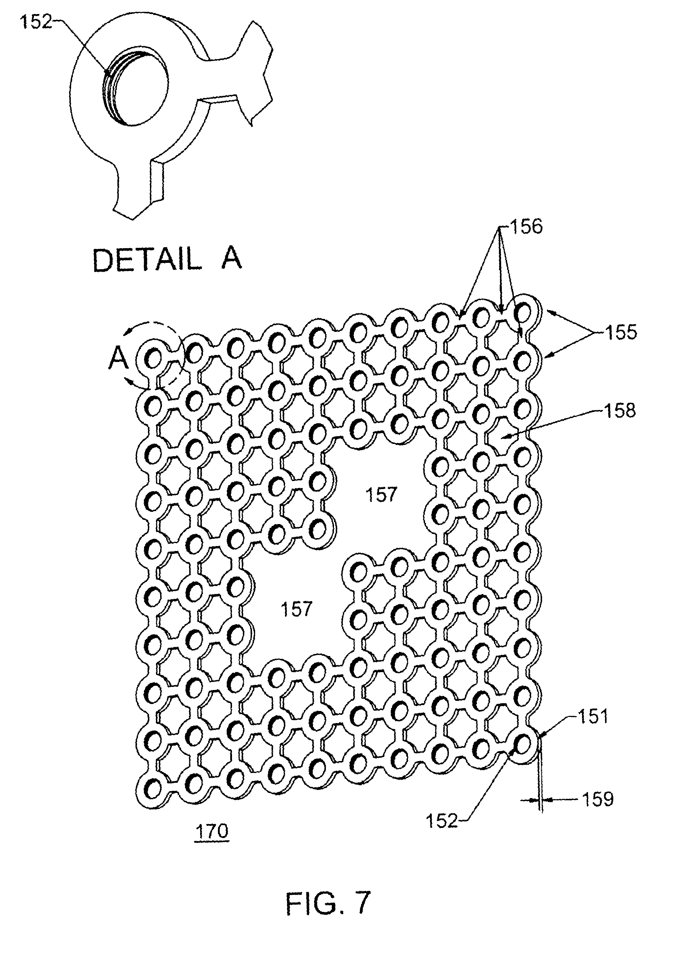

FIG. 7 illustrates another example embodiment spacer plate 170, with several similar elements to the example embodiment shown in FIG. 6, whose redundant descriptions are omitted. Example embodiment spacer plate 160 illustrates how gaps 157 may be alternatively shaped in order to accommodate different example embodiment fuel bundle water rod designs. Further, FIG. 7 illustrates how inner diameter 152 may include threads in DETAIL A to accommodate alternative methods of fixing the spacer at connection points between example embodiment rod segments.

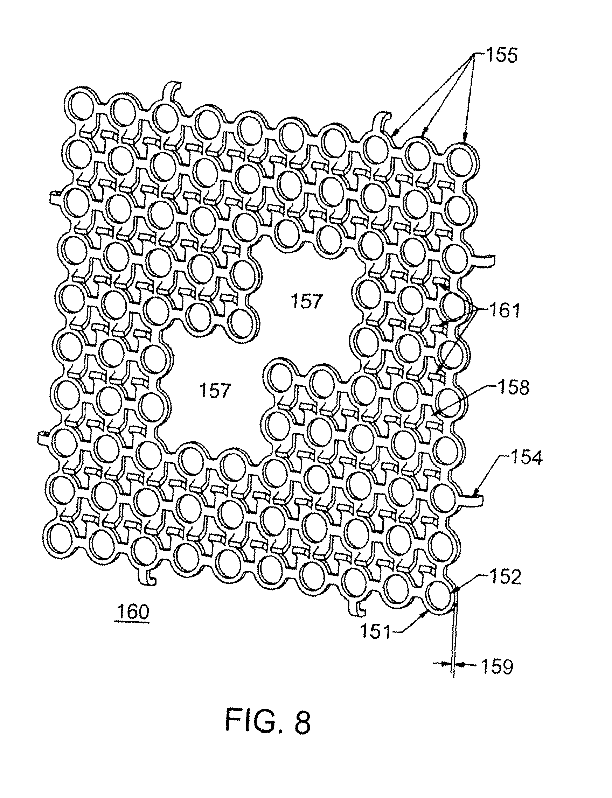

As shown in FIG. 8, example embodiment spacer plate 160 also may include several mixing tabs 161 extending into flow channels of example embodiment fuel rod segment bundles including example embodiment spacer plates 160. Mixing tabs 161 may extend from joint rings 155 in a transverse direction perpendicular to the axial direction of example embodiment bundles into flow holes 158. Mixing tabs 161 may further be curved in a direction of coolant flow through example embodiment spacer plates 160. One or more mixing tabs may extend from each joint ring 155.

The mixing tabs 161 may induce turbulence or alternate flow patterns, such as vortices and flow twisting, in coolant flowing through example embodiment spacer plates 160. The mixing tabs may provide better coolant mixing and thus heat transfer from example embodiment rod segments to the coolant. Further, the mixing tabs 160 may be varied in size and configuration to achieve a desired flow and mixing pattern through specific flow channels. For example, larger mixing tabs 160 may reduce flow though corresponding flow holes 158, whereas mixing tabs 160 with uncurved or severe edges may induce more turbulence and pressure drop in coolant flow.

Example embodiment spacer plate 160 may further include one or more spring tabs 154 extending from peripheral joint rings 155. Spring tabs 154 may position and/or maintain desired intervals between adjacent spacer plates 160 and thereby maintain similar positions and/or intervals between example embodiment fuel bundles containing spacer plates 160. Spring tabs 154 may be generally continuous with example embodiment spacer plate 160. Alternatively, spring tabs 154 may be joined with spacer plate 160 by any suitable means, including welding, soldering, riveting, etc. Spring tabs 154 may extend from joint rings 155 at an angle such that the spring tabs 154 also may extend upward or downward in the axial direction. Spring tabs 154 may be made from materials similar to that of the spacer plate 160, discussed below, that permit rigid spacing between adjacent fuel bundles with a degree of elasticity to account for changes in bundle shape throughout the operating cycle. In this way, spring tabs 154 may rigidly align adjacent fuel bundles within the core at the several axial spacer plate positions without touching and/or fretting the actual fuel rods within the bundles.

Example embodiment spacer plates may be fabricated out of several different types of materials that are compatible with conditions in an operating nuclear core and maintain a minimum rigidity so as to properly space and maintain example embodiment fuel segments and bundles and provide the flexibility needed to enable slight difference in axial differential growth between adjacent rods. For example, known corrosion-resistant alloys containing zirconium used in conventional nuclear core environments may be used to fabricate example embodiment spacer plates. Alternatively, corrosion-resistant stainless steels or other materials compatible with nuclear core conditions may be used.

Because example embodiment spacer plates do not require assembly of multiple parts or welds and thus may be internally continuous, they may be fabricated from a single stamp out of an appropriate material sheet. This simple fabrication process may reduce fabrication costs and ease inspection of example embodiment spacer plates and fuel bundles before insertion into and inside the operating core.

Example embodiments thus being described, it will be appreciated by one skilled in the art that example embodiments may be varied through routine experimentation and without further inventive activity. Variations are not to be regarded as departure from the spirit and scope of the exemplary embodiments, and all such modifications as would be obvious to one skilled in the art are intended to be included within the scope of the following claims.

## Claims

1. A nuclear fuel bundle comprising:
a plurality of fuel rods disposed in a channel in an axial direction, at least one fuel rod formed of a plurality of fuel rod segments removably mated to each other in the axial direction and individually cladded;
at least one spacer plate spanning the channel in a transverse direction perpendicular to the axial direction, the spacer plate rigidly confined in the channel by at least one mating between the fuel rod segments.

2. The bundle of claim 1, wherein the spacer plate includes a plurality of joint rings interconnected by a plurality of spacing segments.

3. The bundle of claim 2, wherein,
each of the joint rings has an inner diameter and thickness permitting a connection member from a first fuel rod segment to pass through the joint ring into a reception member of a second fuel rod segment so as to confine the spacer plate between the mated first and second fuel rod segments,
each of the joint rings has an outer diameter that is substantially equal to a diameter of at least one of the first and second fuel rod segments, and
each of the spacing segments between adjacent connection rings has a length configured to space the rings at rigid intervals, the spacing segments being continuous with the adjacent connection rings.

4. The bundle of claim 3, wherein the joint rings and spacing segments define at least one gap in the bundle.

5. A spacer plate for a nuclear fuel bundle, the spacer plate comprising:
a plate having a plurality of joint rings connected by spacing segments, the plate being planar and non-welded, the joint rings having an inner diameter permitting a connection member from a fuel rod segment to pass through the joint ring.

6. The spacer plate of claim 5, or the bundle of any of claims 1 to 4, wherein the spacer plate is fabricated from a material designed to substantially maintain physical properties of the material in an operating nuclear core environment.

7. The spacer plate of claim 5 or 6, or the bundle of any of claims 1 to 4, wherein the spacer plate is fabricated from an alloy including zirconium.

8. The spacer plate of any of claims 5 to 7, or the bundle of any of claims 1 to 4, wherein the spacer plate includes at least one mixing tab connected to one of the joint rings, the mixing tab configured to mix a coolant flowing through the spacer plate.

9. The spacer plate of claim 8, wherein the mixing tab extends outward from the joint ring in a transverse direction and is curved in a direction the coolant will flow through the spacer plate.

10. The spacer plate of any of claims 5 to 9, wherein the joint rings and spacing segments do not occur at positions so as to define at least one gap in the bundle.

11. The spacer plate of any of claims 5 to 10, wherein the joint rings have an outer diameter equal to an outer diameter of the fuel rod segment.

12. The spacer plate of any of claims 5 to 11, wherein the spacer plate has a thickness configured to permit elastic reshaping of the spacer plate to account for changes in shapes of adjacent fuel rods.

13. The spacer plate of any of claims 5 to 12, further comprising:
at least one spring tab extending from a periphery of the spacer plate, the at least one spring tab configured to maintain a relative transverse position of the spacer plate.

14. The spacer plate of any of claims 5 to 13, wherein the inner diameter includes threading, the threading configured to screw onto the connection member.

15. The spacer plate of any of claims 5 to 14, wherein the joint rings are spaced in a square matrix.
